# EUROPÄISCHE PATENTSCHRIFT

(11) **EP 2 509 817 B1**
(45) Veröffentlichungstag und Bekanntmachung des Hinweises auf die Patenterteilung: **05.04.2017**
(21) Anmeldenummer: 10787047.9
(22) Anmeldetag: 12.11.2010
(51) Int. Cl.: B60L 5/20

(54) **SENSORELEMENT FÜR EINE SENSORVORRICHTUNG**
SENSOR ELEMENT FOR A SENSOR DEVICE
ELÉMENT DE DÉTECTION POUR DISPOSITIF DE DÉTECTION

(30) Priorität: 09.12.2009 DE 102009047757
(43) Veröffentlichungstag der Anmeldung: 17.10.2012
(73) Patentinhaber: Schunk Hoffmann Carbon Technology AG, 4822 Bad Goisern (AT)
(72) Erfinder: RASTL, Hans, A-4822 Bad Goisern (AT)
(74) Vertreter: advotec.
(86) Internationale Anmeldenummer: PCT/EP2010/067358
(87) Internationale Veröffentlichungsnummer: WO 2011/069776

(56) Entgegenhaltungen:
- EP-A1- 0 872 374
- EP-A1- 1 366 947
- WO-A1-90/13453
- CN-Y- 2 799 313
- DE-A1- 4 425 460
- DE-C- 688 290
- DE-C1- 3 817 743

## Beschreibung

Die Erfindung betrifft ein Sensorelement für eine Sensorvorrichtung, insbesondere für Kohleschleifstücke zur Energieübertragung von einem Fahrdraht auf ein Fahrzeug, sowie ein Kohleschleifstück mit einem Sensorelement, wobei das Sensorelement aus einem fluiddichten Rohrprofil gebildet ist, welches in einer Längsausnehmung eines Kohleschleifstücks anordbar und mit Druckluft beaufschlagbar ist, wobei an dem Rohrprofil zumindest eine Sollbruchstelle ausgebildet ist.

Kohlenschleifstücke dienen regelmäßig auch als eine sog. Schleifleiste zur Energieübertragung von einem Fahrdraht auf ein Fahrzeug, wie beispielsweise eine Lokomotive. Bei einer starken Abnutzung oder Beschädigung des Kohleschleifstücks kann es unter anderem zu einer starken Beschädigung des Fahrdrahts bzw. einer Oberleitung kommen. Lokomotiven sind daher regelmäßig mit einer Sensorvorrichtung ausgestattet, die ein Absenken der Schleifleiste mit dem Kohleschleifstück bzw. eines Pantografen bewirkt, wenn eine bestimmte Verschleißgrenze des Kohleschleifstücks überschritten ist oder Beschädigungen am Kohleschleifstück auftreten. Die Sensorvorrichtung umfasst ein Sensorelement, welches als ein fluiddichter Kanal oder als ein Rohrprofil in dem Kohleschleifstück ausgebildet sein kann, wobei das Sensorelement mit Druckluft beaufschlagt wird. Bei Erreichen der Verschleißgrenze kommt es zu einem Anschleifen des Kanals bzw. des Rohrprofils und zu einem Entweichen von Druckluft. Der Druckverlust wird von der Sensorvorrichtung detektiert, worauf ein Absenken des Pantografen erfolgt.

Teilweise werden in Kohleschleifstücken stabile Rohrprofile verwendet, die in einer Längsausnehmung auf einer Unterseite oder innerhalb des Kohleschleifstücks eingesetzt sind. Hier tritt das Problem auf, dass ein, beispielsweise aus einem Metallrohr ausgebildetes Rohrprofil nicht zuverlässig beschädigt wird, d.h. nicht in allen vorgesehenen Fällen ein auslösen der Sensorvorrichtung und Absenken des Pantografen bewirkt. Wenn beispielsweise Kohlestücke durch eine Fehlstelle am Fahrdraht verursacht aus dem Kohleschleifstück herausbrechen, kann das Rohrprofil freigelegt und teilweise stark verformt werden. Insbesondere bei ausreichend elastischen und metallischen Rohrprofilen führt diese Verformung nicht zwangsläufig zu einer unmittelbaren Schädigung einer Rohrprofilwandung, die einen Austritt von Druckluft bewirken könnte. Um Oberleitungsschäden zu vermeiden, ist es jedoch notwendig, dass der Pantograf unmittelbar nach einer derartigen Beschädigung des Kohleschleifstücks abgesenkt wird.

Aus der CN 2799313Y ist ein Sensorelement für ein Kohleschleifstück bekannt, welches aus einem fluiddichten Rohrprofil gebildet und in einer Längsausnehmung eines Kohleschleifstücks angeordnet ist. Das Rohrprofil ist aus einer Reihe von metallischen Rohrabschnitten gebildet, die von einer Isolierung (7) ummantelt sind. Die Isolierung soll insbesondere einen Überschlag eines Lichtbogens auf das Rohrprofil verhindern. Das Rohrprofil bzw. die Rohrabschnitte bilden als umlaufende Nut ausgebildete Sollbruchstellen aus, wobei eine Tiefe der Nut einer Hälfte einer Wanddicke des Rohrprofils entsprechen kann. Die Sollbruchstellen des Rohrprofils sollen ein Ansprechverhalten einer Sensorvorrichtung bei einem Bruch oder einer Beschädigung des Kohleschleifstücks verbessern.

Der vorliegenden Erfindung liegt daher die Aufgabe zu Grunde, ein Sensorelement bzw. ein Kohleschleifstück mit einem Sensorelement vorzuschlagen, welches einfach herzustellen ist.

Diese Aufgabe wird durch ein Sensorelement mit den Merkmalen des Anspruchs 1 sowie durch ein Kohleschleifstück mit den Merkmalen des Anspruchs 10 gelöst.

Das erfindungsgemäße Sensorelement für eine Sensorvorrichtung, insbesondere für Kohleschleifstücke zur Energieübertragung von einem Fahrdraht auf ein Fahrzeug, ist aus einem fluiddichten Rohrprofil gebildet, welches in einer Längsausnehmung in einem Kohleschleifstück anordbar und mit Druckluft beaufschlagbar ist, wobei an dem Rohrprofil zumindest eine Sollbruchstelle ausgebildet ist, wobei die Sollbruchstelle wendelförmig ausgebildet ist.

Eine Verformung des Rohrprofils ohne einen Austritt von Druckluft aus dem Rohrprofil, wie sie bei einer schweren Beschädigung eines Kohleschleifstücks erfolgen kann bewirkt eine Zug- und/oder Biegebeanspruchung des Rohrprofils. Die Sollbruchstelle am Rohrprofil ist so ausgebildet, dass sie auf derartige Beanspruchungen reagieren kann und eine Öffnung einer Rohrprofilwandung an der Sollbruchstelle schnell und zuverlässig bewirkt wird, an der Druckluft aus dem Rohrprofil ausströmen kann. Dabei ist es grundsätzlich unerheblich aus welchem Material das Rohrprofil besteht bzw. mit welcher Querschnittsform das Rohrprofil ausgebildet ist. Das Rohrprofil kann demnach auch einen runden, eckigen oder ovalen Querschnitt aufweisen.

Erfindungsgemäß ist die Sollbruchstelle wendelförmig ausgebildet. Beispielsweise spiralförmig oder gewindeartig, ein- oder mehrgängig, auch in unterschiedlichen Steigungen bzw. in gegenläufigen Richtungen. In einer Ausführungsform kann die Sollbruchstelle durch eine an der Sollbruchstelle verringerte Wanddicke einer sonst gleichmäßigen Rohrprofilwandung ausgebildet sein. D.h. die Rohrprofilwandung kann eine Schwächungsstelle aufweisen, die beispielsweise bei einer Zugbelastung oder Biegung des Rohrprofils aufgrund der an dieser Stelle verringerten Wanddicke eine ausreichend große Öffnung der Rohrprofilwandung bewirkt.

Besonders vorteilhaft ist es, wenn eine Mehrzahl von Sollbruchstellen entlang einer Längserstreckung des Rohrprofils ausgebildet ist. Eine Wahrscheinlichkeit, dass eine Sollbruchstelle in einem Bereich eines zu erwartenden Bruchs eines Kohleschleifstücks liegt, ist damit gegenüber einem Rohrprofil mit einer einzigen Sollbruchstelle wesentlich erhöht.

Auch können die Sollbruchstellen regelmäßig voneinander beabstandet sein. Beispielsweise können die Sollbruchstellen in gleichen Abständen am Rohrprofil ausgebildet sein, wobei die Abstände so gewählt sein können, dass sichergestellt ist, dass bei einem Herausbrechen von Kohlestücken aus dem Kohleschleifstück eine Sollbruchstelle in unmittelbarer Nähe der Beschädigung liegt.

Die Sollbruchstelle ist einfach herstellbar, wenn sie auf einer Außenseite des Rohrprofils ausgebildet ist. Das Rohrprofil kann dann besonders einfach durch einen Materialabtrag partiell geschwächt werden.

Weiter kann die Sollbruchstelle als eine umlaufende Nut ausgebildet sein. Eine umlaufende Nut ist besonders einfach herstellbar, beispielsweise durch einen Materialabtrag mittels Drehen, Fräsen, Schleifen, Stoßen, Ätzen, Lasern etc. oder durch eine Einkerbung einer Rohrprofiloberfläche mittels Rollen, Drücken, Rändeln, Prägen, Recken, Stauchen etc.. Die Nut kann im Querschnitt rechteckig, dreieckig, trapezförmig, Y-förmig oder x-förmig, auf der Außenseite und/oder Innenseite des Rohrprofils ausgebildet sein.

Das Rohrprofil kann zumindest teilweise als ein Wellrohr ausgebildet sein. Beispielsweise durchgängig oder abschnittsweise in Art eines Faltenbalges oder als ein so genanntes Faltrohr.

Abweichend von der Erfindung kann die Sollbruchstelle in Längsrichtung des Rohrprofils ausgebildet sein, wie zum Beispiel durch eine oder mehrere Wandstärkenverringerungen in Längsrichtung des Rohrprofils. Die Sollbruchstellen in Längsrichtung können mit Sollbruchstellen in Querrichtung kombiniert oder für sich alleine am Rohrprofil ausgebildet sein.

Neben der Ausbildung des Rohrprofils aus einem Kunststoffmaterial kann das Rohrprofil auch aus einem Metallrohr gebildet sein. Vorzugsweise kann das Metallrohr aus Kupfer bestehen.

Das Rohrprofil kann besonders kostengünstig und einfach hergestellt werden, wenn das Rohrprofil mit einem runden Querschnitt ausgebildet ist. Derartige Rohrprofile sind als Halbzeug einfach erhältlich, wobei dann am Rohrprofil lediglich die Sollbruchsstelle ausgebildet werden muss.

Das erfindungsgemäße Kohleschleifstück, insbesondere zur Energieübertragung von einem Fahrdraht auf ein Fahrzeug, weist ein erfindungsgemäßes Sensorelement nach einem der Ansprüche 1 bis 9 auf, wobei eine Sollbruchstelle des Sensorelements innerhalb eines Schleifkontaktabschnitts A des Kohleschleifstücks angeordnet ist. Somit wird eine sofortige Aktivierung des Sensorelements bei einer Beschädigung des Kohleschleifstücks durch einen Fahrdraht begünstigt.

Weitere vorteilhafte Ausführungsformen eines Kohleschleifstücks ergeben sich aus den Merkmalsbeschreibungen der auf den Vorrichtungsanspruch 1 rückbezogenen Unteransprüche.

Im Folgenden wird die Erfindung unter Bezugnahme auf die beigefügten Zeichnungen näher erläutert.

Es zeigen:
- **Fig. 1:**: Eine Querschnittsansicht einer Schleifleiste entlang einer Linie I-I aus **Fig. 4** in einer schematischen Darstellung;
- **Fig. 2:**: eine abschnittsweise Seitenansicht eines von der Erfindung abweichenden Rohrprofils;
- **Fig. 3:**: das Rohrprofil aus **Fig. 2** in einer Längsschnittansicht;
- **Fig. 4:**: eine Seitenansicht einer Schleifleiste in einer schematischen Darstellung.

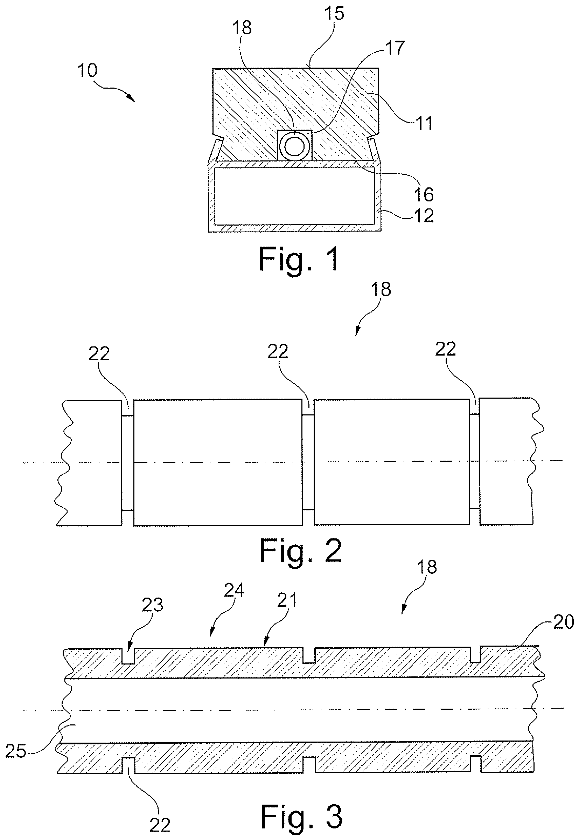

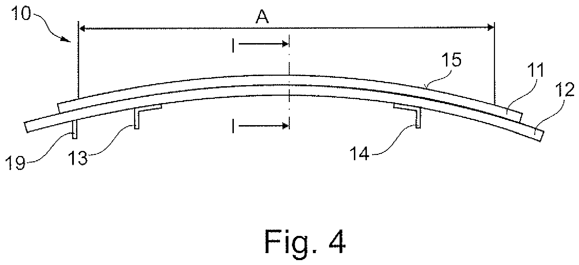

**Fig. 1** zeigt eine Querschnittsansicht einer Schleifleiste 10 aus **Fig. 4**, wobei die Schleifleiste 10 im Wesentlichen aus einem Kohleschleifstück 11 und einem Halteprofil 12 gebildet ist. Die Schleifleiste 10 ist mittels Haltewinkeln 13 und 14 an einem hier nicht dargestellten Pantografen befestigt, so dass in einem Schleifkontaktabschnitt A ein ebenfalls nicht dargestellte Fahrdraht auf einer Schleifkontaktoberfläche 15 des Kohleschleifstücks 11 zur Übertragung elektrischer Energie kontaktiert werden kann. In einer Unterseite 16 des Kohleschleifstücks 11 ist weiter eine Längsausnehmung 17 ausgebildet, in die ein Rohrprofil 18 eingesetzt ist. Das Rohrprofil 18 ist mittels einer Anschlussleitung 19 an eine hier nicht gezeigte Sensoreinrichtung einer Sensorvorrichtung einer Lokomotive angeschlossen. Bei einer Öffnung bzw. einem Durchbruch einer Rohrprofilwandung 20 des Rohrprofils 18 strömt Druckluft aus dem Rohrprofil 18 aus, wodurch die Sensorvorrichtung ein Absenken des Pantografen mit der Schleifleiste 10 und somit eine Trennung vom Fahrdraht bewirkt.

Wie den **Fig. 2** und **3** zu entnehmen ist, sind an dem Rohrprofil 18, insbesondere an dessen Außenseite 21, umlaufende Nuten 22 ausgebildet und in gleichen Relativabständen entlang einer Längserstreckung des Rohrprofils 18 angeordnet. Die Nuten 22 bilden jeweils Sollbruchstellen aus, da die Rohrprofilwandung 20 in einem Wandungsabschnitt 23 der Nut 22 gegenüber einem regelmäßigen Wandungsabschnitt 24 der Rohrprofilwandung 20 eine verringerte Wanddicke aufweist. Eine Zug- oder Biegebeanspruchung des Rohrprofils 18 bewirkt somit einen Bruch bzw. eine Öffnung der Rohrprofilwandung 20 im Bereich der Nut 22. Dies ist besonders vorteilhaft, da das Rohrprofil 18 im beschriebenen Fall aus vergleichsweise elastischem Kupfer besteht. In einem Innenraum 25 des Rohrprofils 18 befindliche Druckluft kann bei einer derartigen Beschädigung des Rohrprofils 18 leicht aus diesem austreten. Insbesondere die umfängliche Ausbildung der Nut 22 begünstigt einen vollständigen Durchbruch des Rohrprofils 18 und somit ein schnelles Austreten der Druckluft, was gegenüber einem schmalen Riss ein schnelles Ansprechen der Sensorvorrichtung bewirkt.

Um in jeder Kontaktposition des Fahrdrahts auf dem Kohleschleifstück 11 bzw. der Schleifkontaktoberfläche 15 eine zuverlässige Funktion der Sensorvorrichtung zu gewährleisten sind die Nuten 22 entlang des gesamten Schleifkontaktabschnitts A über die Längserstreckung des Rohrprofils 18 verteilt bzw. angeordnet.

## Patentansprüche

1. Sensorelement für eine Sensorvorrichtung, insbesondere für Kohleschleifstücke zur Energieübertragung von einem Fahrdraht auf ein Fahrzeug, wobei das Sensorelement aus einem fluiddichten Rohrprofil (18) gebildet ist, welches in einer Längsausnehmung (17) eines Kohleschleifstücks (11) anordbar und mit Druckluft beaufschlagbar ist, wobei an dem Rohrprofil zumindest eine Sollbruchstelle ausgebildet ist,
**dadurch gekennzeichnet,**
**dass** die Sollbruchstelle wendelförmig ausgebildet ist.

2. Sensorelement nach Anspruch 1,
**dadurch gekennzeichnet,**
**dass** die Sollbruchstelle durch eine an der Sollbruchstelle verringerte Wanddicke einer gleichmäßigen Rohrprofilwandung (20) ausgebildet ist.

3. Sensorelement nach Anspruch 1 oder 2,
**dadurch gekennzeichnet,**
**dass** eine Mehrzahl von Sollbruchstellen entlang einer Längserstreckung des Rohrprofils (18) ausgebildet sind.

4. Sensorelement nach Anspruch 3,
**dadurch gekennzeichnet,**
**dass** Sollbruchstellen regelmäßig voneinander beabstandet sind.

5. Sensorelement nach einem der vorangehenden Ansprüche,
**dadurch gekennzeichnet,**
**dass** die Sollbruchstelle auf einer Außenseite (21) des Rohrprofils (18) ausgebildet ist.

6. Sensorelement nach einem der vorangehenden Ansprüche,
**dadurch gekennzeichnet,**
**dass** die Sollbruchstelle als eine umlaufende Nut (22) ausgebildet ist.

7. Sensorelement nach einem der vorangehenden Ansprüche,
**dadurch gekennzeichnet,**
**dass** das Rohrprofil zumindest teilweise als ein Wellrohr ausgebildet ist.

8. Sensorelement nach einem der vorangehenden Ansprüche,
**dadurch gekennzeichnet,**
**dass** das Rohrprofil (18) aus einem Metallrohr gebildet ist.

9. Sensorelement nach einem der vorangehenden Ansprüche,
**dadurch gekennzeichnet,**
**dass** das Rohrprofil (18) mit einem runden Querschnitt ausgebildet ist.

10. Kohleschleifstück (11), insbesondere zur Energieübertragung von einem Fahrdraht auf ein Fahrzeug,
mit einem Sensorelement nach einem der Ansprüche 1 bis 9, **dadurch gekennzeichnet,**
**dass** eine Sollbruchstelle des Sensorelements innerhalb eines Schleifkontaktabschnitts (A) des Kohleschleifstücks angeordnet ist.

## Claims

1. A sensor element for a sensor device, in particular for carbon current collector strips for transmitting energy from a contact wire to a vehicle, said sensor element being formed from a fluid-tight tube profile (18) which can be arranged in a longitudinal recess (17) of a carbon current collector strip (11) and can be pressurized using compressed air, at least one predetermined breaking point being formed at the tube profile,
**characterized in that**
the predetermined breaking point is formed helically.

2. The sensor element according to claim 1,
**characterized in that**
the predetermined breaking point is formed by a wall thickness of a uniform tube profile wall (20), said wall thickness being thinner at the predetermined breaking point.

3. The sensor element according to claim 1 or 2,
**characterized in that**
a plurality of predetermined breaking points is formed along a longitudinal extension of the tube profile (18).

4. The sensor element according to claim 3,
**characterized in that**
predetermined breaking points are distanced at regular intervals to each other.

5. The sensor element according to any one of the preceding claims,
**characterized in that**
the predetermined breaking point is formed on an outer side (21) of the tube profile (18).

6. The sensor element according to any one of the preceding claims,
**characterized in that**
the predetermined breaking point is realized as a circumferential groove (22).

7. The sensor element according to any one of the preceding claims,
**characterized in that**
the tube profile is at least partially realized as a corrugated tube.

8. The sensor element according to any one of the preceding claims,
**characterized in that**
the tube profile (18) is made of a metal tube.

9. The sensor element according to any one of the preceding claims,
**characterized in that**
the tube profile (18) is realized having a round cross section.

10. A carbon current collector strip (11), in particular for transmitting energy from a contact wire to a vehicle, having a sensor element according to any one of the claims 1 to 9,
**characterized in that**
a predetermined breaking point of the sensor element is arranged within a current collector strip section (A) of the carbon current collector strip.

## Revendications

1. Élément capteur pour un dispositif capteur, en particulier pour des collecteurs de courant en carbones pour transmettre d'énergie d'un caténaire à une véhicule, ledit élément capteur étant formé d'un profil de tube (18) qui peut être disposé dans un évidement longitudinal (17) d'un collecteur de courant en carbone (11) et peut être pressurisé avec d'air comprimé, au moins un point de rupture prédéterminé étant formé audit profil de tube,
**caractérisé en ce que**
le point de rupture prédéterminé est formé hélicoïdalement.

2. Élément capteur selon la revendication 1,
**caractérisé en ce que**
le point de rupture prédéterminé est formé par une épaisseur de paroi d'un paroi de profil de tube (20), ladite épaisseur de paroi étant plus mince au point de rupture prédéterminé.

3. Élément capteur selon la revendication 1 ou 2,
**caractérisé en ce qu'**
une pluralité de points de rupture prédéterminés est formée le long une extension longitudinale du profil de tube (18).

4. Élément capteur selon la revendication 3,
**caractérisé en ce que**
des points de rupture prédéterminés sont espacés périodiquement.

5. Élément capteur selon l'une quelconque des revendications précédentes,
**caractérisé en ce que**
le point de rupture prédéterminé est formé sur un côté extérieur (21) du profil de tube (18).

6. Élément capteur selon l'une quelconque des revendications précédentes,
**caractérisé en ce que**
le point de rupture prédéterminé est réalisé comme une rainure circonférentielle (22).

7. Élément capteur selon l'une quelconque des revendications précédentes,
**caractérisé en ce que**
le profil de tube est au moins réalisé partiellement comme un tube ondulé.

8. Élément capteur selon l'une quelconque des revendications précédentes,
**caractérisé en ce que**
le profil de tube (18) est fait d'un tube métallique.

9. Élément capteur selon l'une quelconque des revendications précédentes,
**caractérisé en ce que**
le profil de tube (18) est réalisé ayant une section transversale ronde.

10. Collecteur de courant en carbone (11), en particulier pour transmettre d'énergie d'un caténaire à un véhicule, ayant un élément capteur selon l'une quelconque des revendications 1 à 9,
**caractérisé en ce qu'**
un point de rupture prédéterminé de l'élément capteur est disposé dans une section de collecteur de courant (A) du collecteur de courant en carbone.
